# EUROPEAN PATENT APPLICATION

(11) **EP 1 416 658 A1**
(43) Date of publication of application: **06.05.2004**
(21) Application number: 02257509.6
(22) Date of filing: 30.10.2002
(51) Int. Cl.: H04L 1/00

(54) **Power efficient symbol processing**

(71) Applicant: Agilent Technologies Inc., Palo Alto, CA 94303-0870 (US)
(72) Inventor: Vandenhoeck, Roel, Agilent Tech. Belgium S.A/N.V, 3110 Rotselaar (BE); Andries, Alvin, Agilent Tech. Belgium S.A/N.V, 3110 Rotselaar (BE); Brandt, Peter, Agilent Tech. Belgium S.A/N.V, 3110 Rotselaar (BE); Demarsin, Filip, Agilent Tech. Belgium S.A/N.V, 3110 Rotselaar (BE); Dunphy, Stephen, Agilent Tech. Belgium S.A/N.V, 3110 Rotselaar (BE); Jacobs, Annemie, Agilent Tech. Belgium S.A/N.V, 3110 Rotselaar (BE); Hendix, Zeger, Agilent Tech. Belgium S.A/N.V, 3110 Rotselaar (BE)
(74) Representative: Coker, David Graeme

(57) **Abstract**

The present invention is related to a symbol rate processing system for high-speed spread spectrum communications arranged for operation at a specific data rate, comprising programmable hardware blocks running at specific clock frequencies, characterised in that said system comprises programmable registers comprising means for interleaving, means for error correction and means for rate matching, wherein said clock frequencies are significantly less than the frequencies needed in a DSP-centric approach.

## Description

### Field of the invention

The present invention is related to a receiver for IMT-2000 spread-spectrum signals, more particularly to the implementation of the 3G UMTS outer modem functionality.

### State of the art

In IMT-2000 receiver/transceiver technology, one can distinguish a so-called inner modem, and an outer modem. The basic function of the outer modem is channel coding. Channel coding is the combination of error detection, error correction, rate matching, interleaving and transport channel mapping onto physical channels.

Most implementations of the outer modem are mainly software procedures controlling hardware accelerators (hardware blocks with one specific task, e.g. Viterbi or turbo codecs). This means the software handles the data, i.e. the software swaps the data between different hardware accelerators. This is called a DSP centric approach. Disadvantages of this approach are:
- There is a higher load on the processor because the processor can only execute general-purpose instructions and because of the data swapping. The consequence of a higher load is higher power consumption, which is undesirable in any mobile implementation.
- It is not efficient to implement some algorithms in software. An example of such an algorithm is interleaving.

### Aims of the invention

The present invention aims to provide a novel implementation of an outer modem for a spread spectrum transceiver.

### Summary of the invention

The present invention concerns a symbol rate processing system for high-speed spread spectrum communications arranged for operation at a specific data rate, comprising programmable hardware blocks running at specific clock frequencies, characterised in that said system comprises programmable registers and comprises means for interleaving, means for error correction and means for rate matching, wherein said clock frequencies are significantly less than the frequencies needed in a DSP-centric approach. Preferably, in the symbol rate processing system of the invention, the clock frequencies for the means for interleaving, error correction and rate matching are less than 50 times the data rate, preferably less than 40 times the data rate. Lower clock frequencies can also be used. In general, the hardware implemented symbol rate processing system according to the present invention will be able to run at clock frequencies that are less than half of the clock frequency needed for the same functionality with a DSP centric approach.

In the symbol rate processing system according to the present invention, the means for error correction can comprise one or more elements of the group consisting of a convolutional encoder, a viterbi decoder, a turbo encoder and a turbo decoder.

Preferably, the programmable registers are controlled by a microprocessor subsystem. Said microprocessor subsystem preferably comprises one or more parameters selected from the group consisting of code block length, code rate for error codecs, number of code blocks to be processed, number of fillers to be inserted, numbers of bits to be punctured or repeated, number of iterations in turbo decoding, length of CRC, polynomials for codecs and separate enables/resets for blocks.

In the symbol rate processing system of the present invention, the spread-spectrum communications are preferably selected from the group consisting of IMT-2000, 3GPP, 3GPP2, W-CDMA, UMTS/FDD, UMTS/TDD, 1xEV-DO, 1xEV-DV, CDMA2000, IS95, IS95A, IS95B, UWB, TD-SCDMA, LAS-CDMA, IEEE802.11, IEEE802.11A, IEEE802.11B or IEEE802.16 communications.

In a specific embodiment of the present invention, an integrated circuit comprising the symbol rate processing system according to the present invention is disclosed.

A further embodiment is a transceiver for high-speed spread spectrum communications comprising the symbol rate processing system according to the present invention.

### Short description of the drawings

Fig. 1 represents a functional schematic view of an outer modem as used for spread spectrum transceivers.

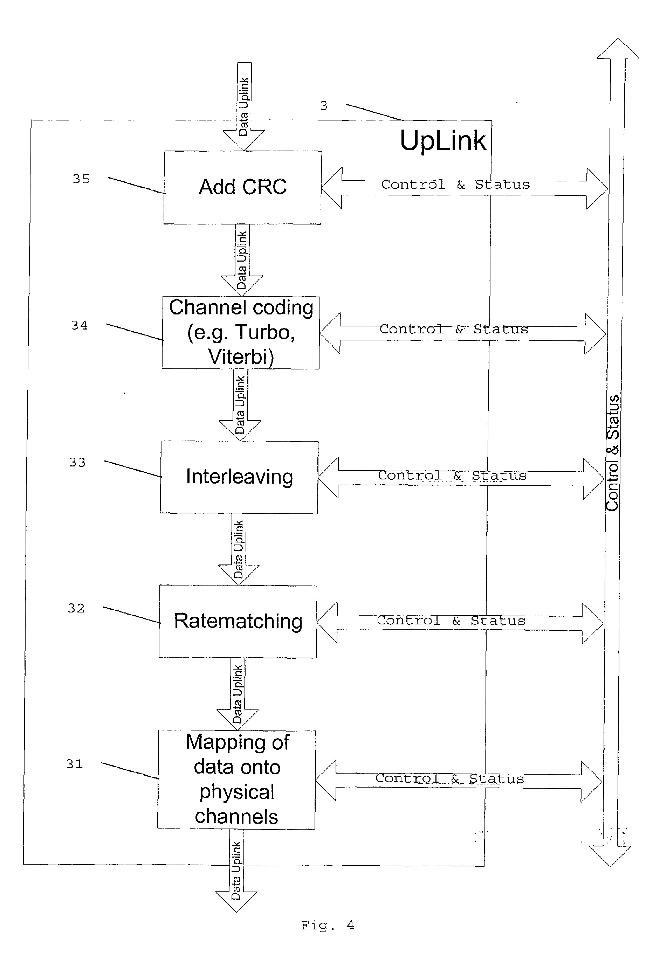

Fig. 2, 3 and 4 respectively show the data and control & Status interface, the downlink block and the uplink block for the outer modem according to the invention.

### Detailed description of the invention

In the present invention, a hardware approach is proposed as the solution for the outer modem implementation. Some of the advantages are:
- High flexibility where needed: part of the outer modem can be configured by software.
- Low power consumption: dedicated hardware can run at a lower clock speed than a processor doing the same job in the same amount of time. This means the dedicated hardware uses less power than a DSP centric solution to execute the same functions.

The maximum data rate refers to the maximum data speed of the user or application data stream that is delivered to the L1-2-3 protocol system of the air interface to consider. The "user" here is e.g. an application program that runs in layers above L3. This data rate will then e.g. still include all the overhead of e.g. an Internet Protocol connection. Also note that for WCDMA, data rate is not the chipping rate. Examples of data rates are 384 kbit/s for UMTS/FDD (mobile applications) and 2 Mbit/s for UMTS/TDD (Office applications)

In general, a transceiver for spread-spectrum comprises a RF part responsible for the transmission and reception of all spread-spectrum signals. On reception of such signals, the so-called inner modem is responsible for acquisition and demodulation of the raw data. When transmitting, the inner modem is used for modulating the data into a spread-spectrum signal. In real-life implementations, this means that an inner modem needs to cope with large data streams being received and sent by the transceiver.

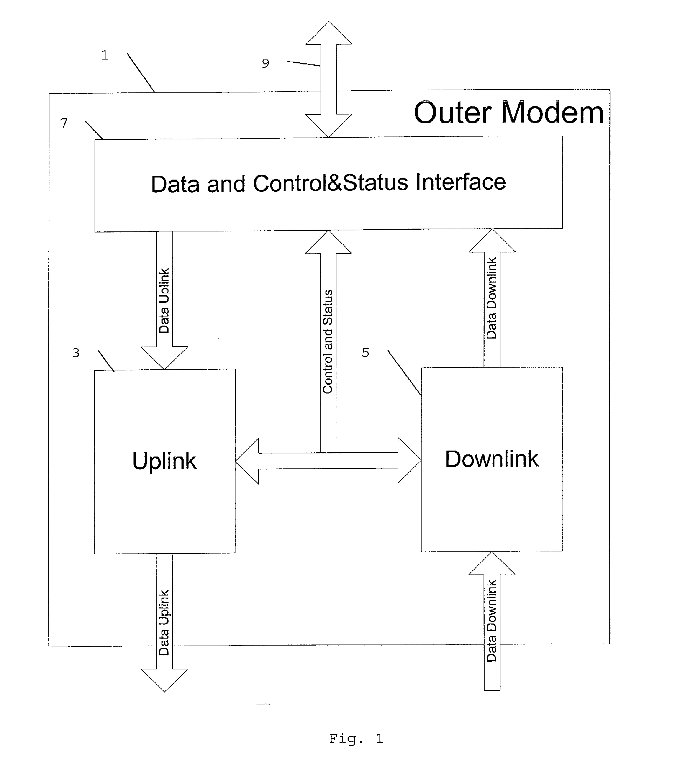

The signal that has been demodulated by the inner modem is not yet usable for the end user. The outer modem 1, as can be seen in figure 1, comprises an uplink block 3 for preparing the data for transmission, a downlink block 5 which prepares received data for the end user, and a Data and Control & Status Interface 7 which allows control from a general purpose processor or DSP for both the downlink and uplink blocks and the data feed to and from the end user.

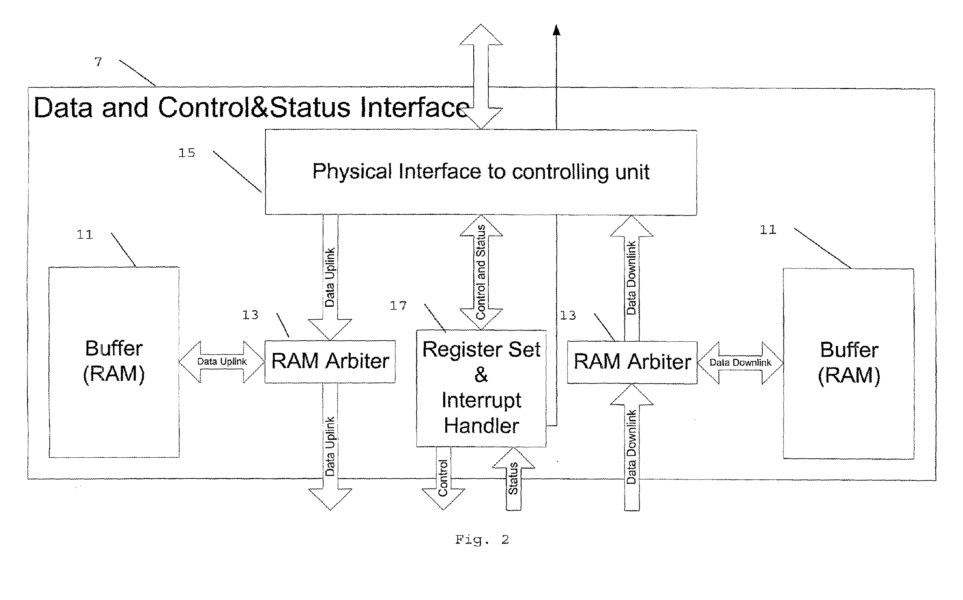

The Data and Control & Status interface 7 is depicted in figure 2. It comprises buffer RAM memory 11 for both uplink and downlink, both data streams being regulated by a RAM arbiter 13. Both data streams are interfaced to a controlling unit by a physical bus interface (15). The Data and Control & Status interface 7 also allows control from a general-purpose processor or DSP for the interrupt handling and registers of the outer modem via the register set & interrupt handler (17).

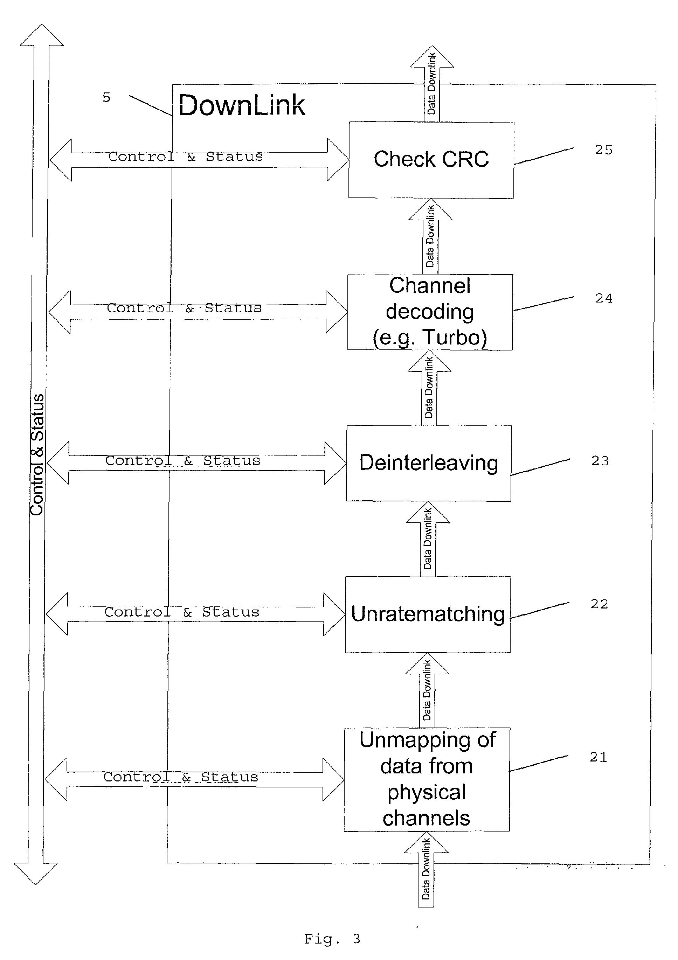

Downlink (5) and uplink (3) blocks are each other's opposites: while uplink block 3 (see fig. 3) comprises Data mapping 31, Ratematching 32, Interleaving 33, Channel coding 34 and CRC 35 blocks, all controlled through the Data and Control & Status interface 7, the downlink block 5 comprises blocks that do the opposite: Data unmapping 21, Unratematching 22, Deinterleaving 23, Channel decoding 24 and CRC check (25) blocks, again all controlled through the Data and Control & Status interface 7. Downlink and uplink are not necessarily symmetrical, for e.g. UMTS a non-symmetrical architecture can be used.

### Description of a preferred embodiment of the invention

An implementation of an outer modem according to the present invention is given as an example:
The outer modem according to an embodiment of the present invention contains:
- RAM in order to buffer data;
- software to configure, control and monitor the outer modem;
- A register set with configuration parameters and status bits. The configuration is written from software, the status bits can be read by software for controlling or monitoring the outer modem;
- Hardware blocks performing data transformations on the data stream. These blocks are in the data path, this means that data is passed between these blocks only;
- Hardware blocks controlling the blocks mentioned above, no data is passing through these blocks.
   These control blocks are configured by software via the register set.
- Interfacing with L1 software, L2/L3 software. To interface with the software a set of registers is provided, as well as a mechanism for interrupt generation, and
- Interfacing with the inner modem.
- A general-purpose DSP/processor to execute the software.

The following functions are provided in dedicated hardware blocks doing data transformations:
- CRC (error detection)
- Block segmentation
- Convolutional encoding, convolutional decoding (e.g. Viterbi decoding), (error correction)
- Turbo encoding/ decoding (error correction)
- Radio frame equalisation
- Rate matching
- Interleavers
- Transport channel multiplexing and physical channel segmentation
- Physical channel mapping.

The above data transformation blocks are controlled by the following control blocks:
- L1, L2/L3 interface PVCI handler. This block controls the PVCI interface, register set and interrupt handling.
- The Transport Channel Controller controls the block segmentation, CRC, convolutional and turbo encoding/decoding.
- The Radio Frame Controller controls rate matching, interleavers, transport channel multiplexing and physical channel segmentation.
- Physical Channel Handling Controller (insertion of TFCI, Pilot bits and interfacing the inner modem).

### Comparative example

A power consumption estimate was made for the base band functionality of three model systems. Base band functionality comprises the inner and outer modem.

For the hardware approach according to the present invention, 1,8V core voltage and 0,18µ CMOS technology is used for a 384 kbit/s data rate. Table 1 shows the power consumption of the different elements. Two DSP centric approaches are estimated, the details thereof are represented in table 2. The DSP centric approach requires a Digital Signal Processor (DSP), peripherals and buses for accessing said DSP, off-chip memory accesses, and hardware accelerators such as viterbi, turbo, rake and modulator. DSP 1 and 2 are clocked at 200 MHz and produce 400 MIPS. Power consumption is respectively 0.72 and 0.25 mW/MIPS.

The results are summarised in table 3. It is clear that a DSP approach uses more current to perform the same function for the same data rate. This is mainly due to the fact that a higher clock frequency is needed for a DSP centric approach.

Other data rates can of course be treated by the hardware symbol processor of the present invention. E.g., for a data rate of 2Mbit/s, a hardware clock frequency of about 60MHz has to be envisaged.

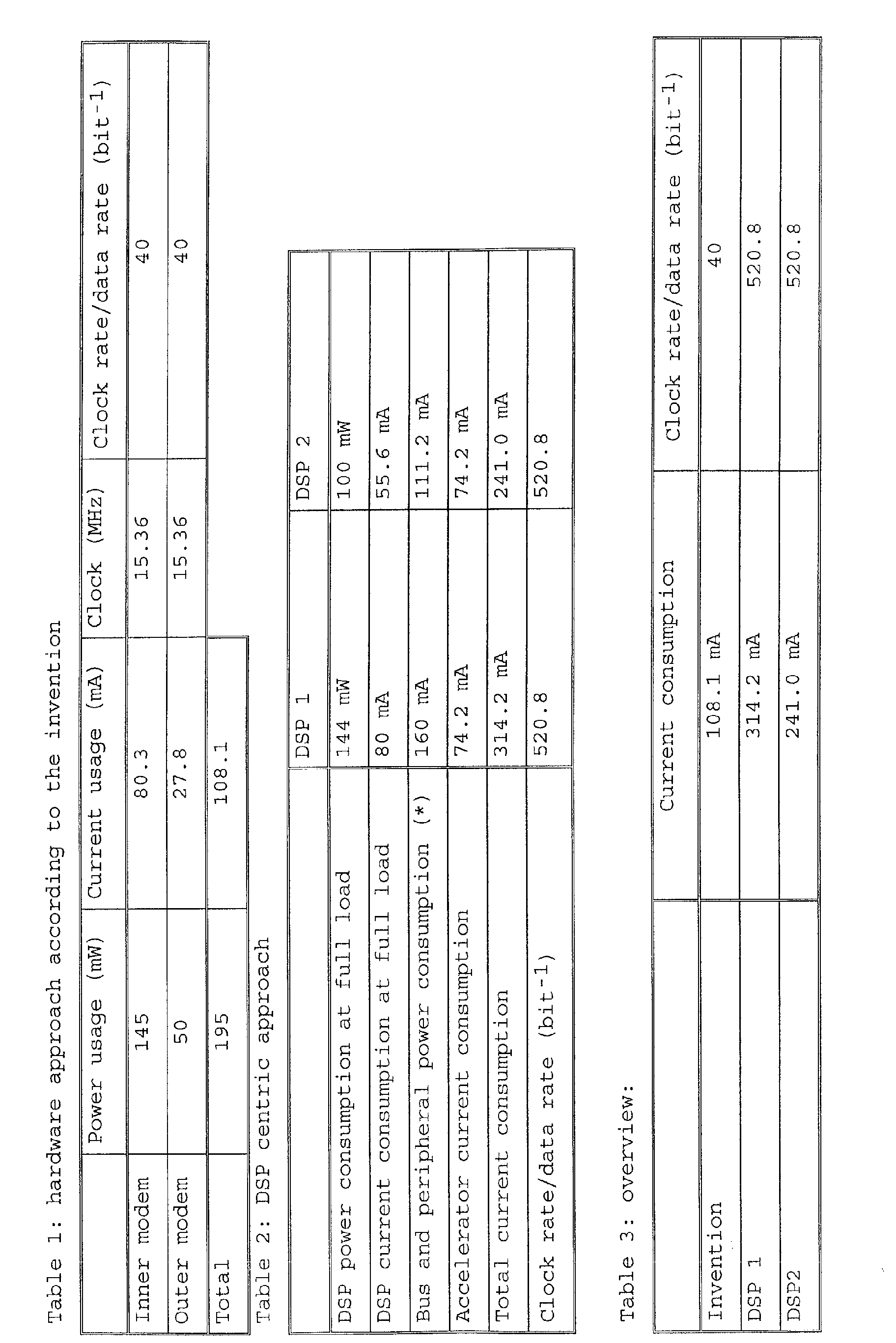

## Claims

1. A symbol rate processing system for high-speed spread spectrum communications arranged for operation at a specific data rate, comprising programmable hardware blocks running at specific clock frequencies, **characterised in that** said system comprises programmable registers and comprises means for interleaving, means for error correction and means for rate matching, wherein said clock frequencies are significantly less than the frequencies needed in a DSP-centric approach.

2. The symbol rate processing system as in claim 1, wherein the clock frequencies for the means for interleaving, error correction and rate matching are less than 50 times the data rate.

3. The symbol rate processing system as in claim 1 or 2, wherein the means for error correction comprises one or more elements of the group consisting of a convolutional encoder, a Viterbi decoder, a turbo encoder and a turbo decoder.

4. The symbol rate processing system as in any of the claim 1 to 3, wherein the programmable registers are controlled by a microprocessor subsystem.

5. The symbol rate processing system as in claim 4, wherein the microprocessor subsystem comprises one or more parameters selected from the group consisting of code block length, code rate for error codecs, number of code blocks to be processed, number of fillers to be inserted, numbers of bits to be punctured or repeated, number of iterations in turbo decoding, length of CRC, polynomials for codecs and separate enables/resets for blocks.

6. The symbol rate processing system as in any of the claims 1 to 5, wherein the spread-spectrum communications are selected from the group consisting of IMT-2000, 3GPP, 3GPP2, W-CDMA, UMTS/FDD, UMTS/TDD, 1xEV-DO, 1xEV-DV, CDMA2000, IS95, IS95A, IS95B, UWB, TD-SCDMA, LAS-CDMA, IEEE802.11, IEEE802.11A, IEEE802.11B or IEEE802.16 communications.

7. An integrated circuit comprising the symbol rate processing system as in any of the claims 1 to 6.

8. A transceiver for high-speed spread spectrum communications comprising the symbol rate processing system as in any of the claims 1 to 6.
